# EUROPEAN PATENT APPLICATION

(11) **EP 4 600 408 A1**
(43) Date of publication of application: **13.08.2025**
(21) Application number: 23888456.3
(22) Date of filing: 19.10.2023
(51) Int. Cl.: C25B 11/052, C25B 11/061, C25B 11/077, C25B 9/00, C25B 1/04

(54) **POSITIVE ELECTRODE FOR ELECTROLYSIS AND METHOD FOR PRODUCING SAME**

(30) Priority: 10.11.2022 JP 2022180176
(71) Applicant: De Nora Permelec Ltd, Fujisawa-shi, Kanagawa 252-0816 (JP); NATIONAL UNIVERSITY CORPORATION YOKOHAMA NATIONAL UNIVERSITY, Yokohama-shi Kanagawa 240-8501 (JP)
(72) Inventor: MITSUSHIMA, Shigenori, Yokohama-shi, Kanagawa 240-8501 (JP); KURODA, Yoshiyuki, Yokohama-shi, Kanagawa 240-8501 (JP); NAGASAWA, Kensaku, Yokohama-shi, Kanagawa 240-8501 (JP); ENJOJI, Hayato, Yokohama-shi, Kanagawa 240-8501 (JP); NISHIKI, Yoshinori, Fujisawa-shi, Kanagawa 252-0816 (JP); KATO, Akihiro, Fujisawa-shi, Kanagawa 252-0816 (JP); ZAENAL, Awaludin, Fujisawa-shi, Kanagawa 252-0816 (JP); NAKAI, Takaaki, Fujisawa-shi, Kanagawa 252-0816 (JP)
(74) Representative: Reitstötter Kinzebach
(86) International application number: PCT/JP2023/037828
(87) International publication number: WO 2024/101105

(57) **Abstract**

An anode for electrolysis in which electrolysis performance is less likely to deteriorate even when electric power having a large output fluctuation, such as renewable energy, is used as a power source and in which excellent catalytic activity is stably maintained for a long period of time is provided. The anode for electrolysis 10 includes a conductive substrate 2 in which at least a surface of the conductive substrate 2 is formed of nickel or a nickel-based alloy; and a first layer 4 formed on the surface of the conductive substrate 2, the first layer 4 being capable of functioning as a catalyst layer containing a lithium-containing nickel cobalt oxide represented by a composition formula LiₓNi_{y}Co₂O₄ (0.05 ≤ × ≤ 1.0, 1.0 ≤ y ≤ 2.0, 1.0 ≤ z ≤ 2.0, and x + y + z = 2 to 3).

## Description

### TECHNICAL FIELD

The present invention relates to an anode for electrolysis and a method for producing the same.

### BACKGROUND ART

Hydrogen is secondary energy that is suitable for storage and transportation and has a small environmental burden, and a hydrogen energy system using hydrogen as an energy carrier has been attracting attention. Currently, hydrogen is mainly produced by steam reforming of fossil fuels and the like, but from the perspective of issues of global warming and fossil fuel depletion, the importance of alkaline water electrolysis using renewable energy as a power source has increased.

Water electrolysis that has progressed to practical use can be divided broadly into two types. One type is alkaline water electrolysis, in which a highly concentrated alkaline aqueous solution is used as an electrolyte. The other type is solid polymer water electrolysis in which a cation exchange membrane (proton exchange membrane (PEM)) is used. It is said that when a large scale hydrogen production is done by water electrolysis, alkaline water electrolysis using an inexpensive material such as an iron-type metal like nickel is more suitable than solid polymer water electrolysis employing an anode with a large amount of expensive noble metals. Besides that, as a system that is still in a development stage, a water electrolysis cell (SOEC) using a solid oxide electrolyte and a solid polymer water electrolysis cell using an anion exchange membrane (AEM) are known.

As for the highly concentrated alkaline aqueous solution, an increase in temperature leads to an increase in conductivity, but also leads to an increase in corrosivity. Thus, an upper limit of an operation temperature is limited to about 80 to 90 °C. Electrolysis performance has been improved to about 1.7 to 1.9 V at a current density of 0.3 to 0.6 A/cm² (efficiency: 78 to 87 %) thanks to the developments of structural materials and various piping materials for electrolyzers that sustain high temperatures and high concentration of alkaline aqueous solution, low-resistance diaphragms and anodes having increased surface areas and coated with catalysts.

It has been reported that when a nickel-based material that is stable in a highly concentrated alkaline aqueous solution is used for an anode for alkaline water electrolysis and a stable power source is used for the alkaline water electrolysis, the nickel-based anode has a lifespan of several decades or longer (Non Patent Literatures 1 and 2). However, when renewable energy is used as a power source, severe conditions such as extreme start-stop or load fluctuations may often arise, and this causes a problem in performance deterioration of a nickel-based anode (Non Patent Literature 3).

Both a formation of a nickel oxide and a reduction of the formed nickel oxide proceed at a metal surface. These reactions facilitate detachment of an anode catalyst formed on the metal surface. When supply of electric power for electrolysis is stopped, the electrolysis will stop and a potential in the nickel-based anode will be maintained at lower than an oxygen evolution potential (1.23 V vs. RHE) and higher than a potential of a cathode for hydrogen generation (0.00 V vs. RHE), which is a counter electrode. An electromotive force is generated by various chemical species in a cell, and the anode potential is maintained low by the progression of a battery reaction, hence a reduction of a nickel oxide is facilitated.

In an electrolyzer in which multiple cells are combined, a current generated by the battery reaction leaks through pipings that connect the cells. As a countermeasure for preventing such current leakage, a method of continuously applying a minute current during a stop may be exemplified. However, applying such minute current continuously during the stop requires a special power control, and leads to constant generation of oxygen and hydrogen, and thus, this causes a problem such as excessive labor for operation management. In addition, in order to intentionally avoid a reverse current state, it is possible to prevent the battery reaction by removing a liquid immediately after the stop. However, such countermeasure is not necessarily appropriate in the case of an operation with electric power having large output fluctuations such as renewable energy.

In order to promptly assess the development of an anode material, a start-stop simulation test has been proposed. In particular, when considering the hydrogen production that directly uses renewable energy, durability against potential fluctuations is an important test item, since frequent output fluctuations are expected (Non Patent Literature 4).

Conventionally, platinum group metals, platinum group metal oxides, valve metal oxides, iron group oxides, lanthanide group metal oxides, or the like are used as a catalyst (anode catalyst) of an anode for oxygen generation used in alkaline water electrolysis. As other anode catalysts, nickel-based alloys such as Ni-Co and Ni-Fe; nickel having an increased surface area; conductive oxides (ceramic materials) such as spinel-type Co₃O₄ and NiCo₂O₄ and perovskite-type LaCoO₃ and LaNiO₃; noble metal oxides; and oxides composed of a lanthanide group metal and a noble metal are known (Non Patent Literature 5).

As the anode for oxygen generation used in the high-concentration alkaline water electrolysis, an anode in which a lithium-containing nickel oxide layer is formed in advance on a surface of a nickel substrate is known (Patent Literatures 1 and 2). In addition, an anode for alkaline water electrolysis in which a lithium-containing nickel oxide catalyst layer containing lithium and nickel at a predetermined molar ratio is formed on a surface of a nickel substrate (Patent Literature 3), and an anode for water electrolysis in which another active catalyst is stacked on such lithium-containing nickel oxide catalyst layer (Patent Literature 4) have been proposed. Furthermore, an anode for alkaline water electrolysis in which a catalyst layer containing a nickel cobalt-based oxide and an iridium oxide or a ruthenium oxide is formed on a surface of a nickel substrate (Patent Literature 5), and an anode for alkaline water electrolysis in which a catalyst layer containing an iridium oxide, a nickel oxide, and a lithium oxide is formed on a surface of a nickel substrate (Patent Literature 6) have been proposed.

### CITATION LIST

### PATENT LITERATURE

Patent Literature 1: GB864457A
Patent Literature 2: US2928783B
Patent Literature 3: JP2015-86420A
Patent Literature 4: WO2019/172160
Patent Literature 5: JP2017-190476A
Patent Literature 6: JP2022-128748A

### NON-PATENT LITERATURE

Non Patent Literature 1: P.W.T.Lu, S.Srinivasan, J. Electrochem.Soc., 125, 1416 (1978)
Non Patent Literature 2: C.T.Bowen, Int.J.Hydrogen Energy, 9, 59 (1984)
Non Patent Literature 3: Shigenori Mitsushima, et al. "Hydrogen Energy System" 36, 11 (2011)
Non Patent Literature 4: Shigenori Mitsushima et al., Electrochemistry vol. 90, 136-158 (2022)
Non Patent Literature 5: J.P.Singh, N.K.Singh, R.N.Singh, Int.J.Hydrogen Energy, 24, 433 (1999)

### SUMMARY OF INVENTION

### TECHNICAL PROBLEM

However, there has been a problem that, even in the anodes for alkaline water electrolysis proposed in Patent Literatures 1 to 6, the performance is likely to deteriorate when electric power having a large output fluctuation, such as renewable energy, is used as a power source, and it has been difficult to stably use them for a long period of time.

The present invention has been devised in view of such problems in the conventional art, and its object is to provide an anode for electrolysis in which electrolysis performance is less likely to deteriorate even when electric power having a large output fluctuation, such as renewable energy, is used as a power source and in which excellent catalytic activity is stably maintained for a long period of time. Another object of the present invention is to provide a method for producing the above anode for electrolysis.

### SOLUTION TO PROBLEM

As a result of intensive studies to solve the above problems, the present inventors have found that the above problems can be solved by disposing, on a surface of a conductive substrate, a first layer that is formed of a lithium-containing nickel cobalt oxide represented by a predetermined composition formula and that is capable of functioning as a catalyst layer, and have completed the present invention.

That is, the present invention provides the following anodes for electrolysis.
[1] An anode for electrolysis, including: a conductive substrate in which at least a surface of the conductive substrate is formed of nickel or a nickel-based alloy; and a first layer formed on the surface of the conductive substrate, the first layer being capable of functioning as a catalyst layer containing a lithium-containing nickel cobalt oxide represented by a composition formula LiₓNi_{y}Co₂O₄ (0.05 ≤ × ≤ 1.0, 1.0 ≤ y ≤ 2.0, 1.0 ≤ z ≤ 2.0, and x + y + z = 2 to 3).
[2] The anode for electrolysis according to [1], further including: a second layer formed on the surface of the first layer, the second layer being capable of functioning as a catalyst layer.
[3] The anode for electrolysis according to [2], in which the second layer contains at least one catalyst selected from the group consisting of a nickel cobalt spinel oxide, a lanthanide nickel cobalt perovskite oxide, an iridium oxide, and a ruthenium oxide.
[4] The anode for electrolysis according to any one of [1] to [3], in which the lithium-containing nickel cobalt oxide is a spinel-type nickel cobalt oxide containing a lithium component.
   In addition, the present invention provides a method for producing an anode for electrolysis described below.
[5] A method for producing an anode for electrolysis, the method including: coating a surface of a conductive substrate in which at least the surface of the conductive substrate is formed of nickel or a nickel-based alloy with an aqueous solution containing a lithium ion, a nickel ion and a cobalt ion; and forming a first layer containing a lithium-containing nickel cobalt oxide represented by a composition formula LiₓNi_{y}Co₂O₄ (0.05 ≤ × ≤ 1.0, 1.0 ≤ y ≤ 2.0, 1.0 ≤ z ≤ 2.0, and x + y + z = 2 to 3) on the surface of the conductive substrate by subjecting the conductive substrate coated with the aqueous solution to heat treatment, the first layer being capable of functioning as a catalyst layer.
[6] The method for producing an anode for electrolysis according to [5], in which the conductive substrate coated with the aqueous solution is subjected to the heat treatment at a temperature of 400 °C or higher and 600 °C or lower.
[7] The method for producing an anode for electrolysis according to [5] or [6], further including: forming a second layer capable of functioning as a catalyst layer on a surface of the first layer.

### ADVANTAGEOUS EFFECTS OF INVENTION

The present invention allows for providing an anode for electrolysis in which electrolysis performance is less likely to deteriorate even when electric power having a large output fluctuation, such as renewable energy, is used as a power source and in which excellent catalytic activity is stably maintained for a long period of time. In addition, the present invention allows for providing a method for producing the above anode for electrolysis.

### BRIEF DESCRIPTION OF DRAWINGS

FIG. 1 is a cross-sectional view schematically illustrating an embodiment of an anode for electrolysis of the present invention.
FIG. 2 is a cross-sectional view schematically illustrating another embodiment of the anode for electrolysis of the present invention.
FIG. 3 is a diagram showing an accelerated durability test mode.
FIG. 4 is a graph showing a change in an anode potential of each of samples due to an accelerated durability test.
FIG. 5 is a graph showing a change in the anode potential of each of the samples due to the accelerated durability test.
FIG. 6 is a graph showing a change in an electric capacity of each of the samples due to the accelerated durability test.
FIG. 7 is a cross-sectional electron micrograph of Example 1 before the accelerated test.
FIG. 8 is a cross-sectional electron micrograph of Example 1 after the accelerated test.
FIG. 9 is a graph showing a change in the anode potential of each of the samples due to the accelerated durability test.

### DESCRIPTION OF EMBODIMENTS

### <Anode for Electrolysis>

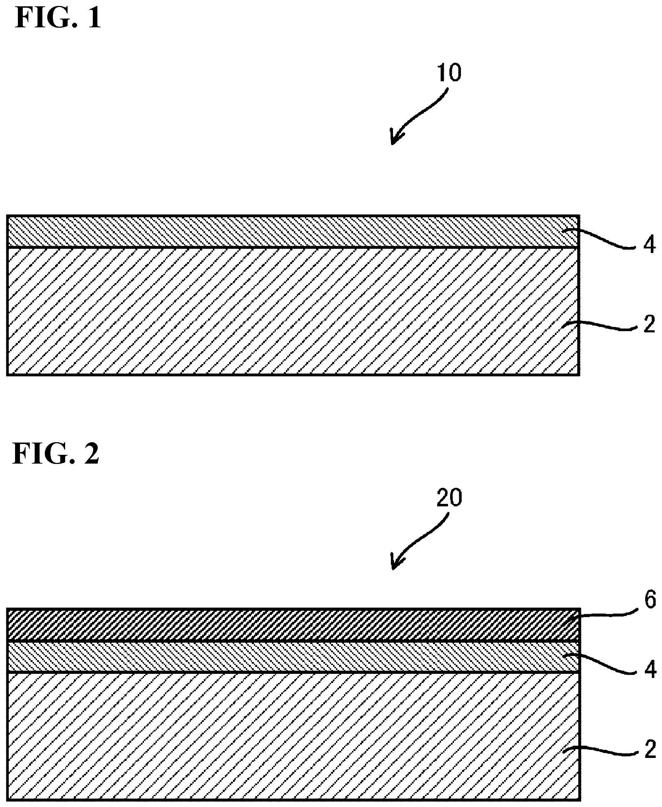

FIG. 1 is a cross-sectional view schematically illustrating an embodiment of an anode for electrolysis of the present invention. As shown in FIG. 1, an anode for electrolysis 10 of the present embodiment includes a conductive substrate 2 and a first layer 4 that is formed on a surface of the conductive substrate 2 and is capable of functioning as a catalyst layer. FIG. 2 is a cross-sectional view schematically illustrating another embodiment of the anode for electrolysis of the present invention. An anode for electrolysis 20 of the embodiment shown in FIG. 2 further includes a second layer 6 that is formed on a surface of the first layer 4 and is capable of functioning as a catalyst layer. Hereinafter, the anodes for electrolysis of the present invention will be described in detail with reference to the drawings.

### (Conductive Substrate)

The conductive substrate 2 is a conductor for conducting electricity for electrolysis, and is a member having a function as a support for supporting the first layer 4 and the second layer 6. At least the surface (the surface on which the first layer 4 is formed) of the conductive substrate 2 is formed of nickel or a nickel-based alloy. That is, the entire conductive substrate 2 may be formed of nickel or a nickel-based alloy, or only the surface thereof may be formed of nickel or a nickel-based alloy. Specifically, the conductive substrate 2 may be formed by coating a surface of a metal material such as iron, stainless steel, aluminum, or titanium with nickel or a nickel-based alloy by plating or the like.

A thickness of the conductive substrate is preferably 0.05 to 5 mm. The conductive substrate preferably has a shape having openings for removing bubbles such as generated oxygen and hydrogen. For example, an expanded mesh or a porous expanded mesh can be used as the conductive substrate. When the conductive substrate has a shape having the openings, an opening ratio of the conductive substrate is preferably 10 to 95%.

### (First Layer)

The first layer 4 is a layer that is formed on the surface of the conductive substrate 2 and is capable of functioning as a catalyst layer. The first layer 4 functions not only as the catalyst layer but also as a layer that suppresses corrosion or the like of the conductive substrate 2. When the second layer 6 is further disposed, providing the first layer 4 allows for stably fixing the second layer 6 to the conductive substrate 2, and also allows for quickly supplying a current to the second layer 6. That is, when the second layer 6 is further disposed, the first layer 4 functions as a so-called intermediate layer.

The first layer is formed of a lithium-containing nickel cobalt oxide represented by a composition formula LiₓNi_{y}Co₂O₄ (0.05 ≤ × ≤ 1.0, 1.0 ≤ y ≤ 2.0, 1.0 ≤ z ≤ 2.0, and x + y + z = 2 to 3). If x in the composition formula is less than 0.05, conductivity is insufficient. On the other hand, if x exceeds 1.0, physical strength and chemical stability decrease. The first layer formed of the lithium-containing nickel cobalt oxide represented by the above composition formula has sufficient conductivity for electrolysis, and exhibits excellent physical strength and chemical stability even when used for a long period of time. The lithium-containing nickel cobalt oxide of the first layer is preferably a spinel-type nickel cobalt oxide containing a lithium component.

A thickness of the first layer is preferably 0.01 µm or more and 100 µm or less, and more preferably 0.1 µm or more and 10 µm or less. If the thickness of the first layer is less than 0.01 µm, the above function is not exhibited. On the other hand, if the thickness of the first layer is more than 100 µm, a voltage loss due to resistance in the first layer becomes large, the above function is also not exhibited, and there may be slightly disadvantageous in terms of producing cost or the like.

### (Second Layer)

The second layer 6 formed on the surface of the first layer 4 is a layer that is capable of functioning as a catalyst layer. The second layer 6 is fixed on the conductive substrate 2 with sufficient strength by interposing the first layer 4 therebetween as the intermediate layer. The type of catalysts contained in the second layer 6 is not limited, and a catalyst having catalytic ability suitable for a given purpose can be selected and used. For example, when the anode for electrolysis 20 is an anode for alkaline water electrolysis, the second layer 6 can be composed of catalysts used for an anode for alkaline water electrolysis.

Specific examples of the catalyst of the second layer include a nickel cobalt spinel oxide (NiCo₂O₄), a lanthanide nickel cobalt perovskite oxide, an iridium oxide, a ruthenium oxide, and the like. The lanthanide nickel cobalt perovskite oxide has a structural formula of XNiₐCo₁₋ₐO₃ (X represents at least one metal selected from lanthanum, cerium, and praseodymium, and 0 < a < 1). Among these catalysts, one catalyst may be used to form the second layer, or multiple catalysts may be used to form the second layer. When multiple catalysts are used, the components of the catalysts can be mixed to form one second layer. Or layers of respective catalyst components may be stacked to form the catalyst layer. When the layers are stacked, each of the layers may be composed of one catalyst, or may be formed of a layer in which multiple catalysts are mixed. For example, as the second layer 6, a layer of a nickel cobalt spinel oxide may be formed on the first layer 4, and a layer of an iridium oxide may be stacked on the layer of a nickel cobalt spinel oxide afterward. A thickness, density, and the like of the second layer are not limited, and may be appropriately set according to an application and the like of the anode.

### <Method for Producing Anode for Electrolysis>

Next, an embodiment of a method for producing an anode for electrolysis of the present invention will be described. The method for producing an anode for electrolysis of the present embodiment described below is a method for producing the anode for electrolysis described above, and the first layer is formed by a thermal decomposition method. Nevertheless, the method for forming the first layer is not limited to the thermal decomposition method, and for example, sputtering, ion plating, and plasma spraying can be adopted.

The method for producing an anode for electrolysis of the present embodiment using the thermal decomposition method includes a step (coating step) of coating a surface of a conductive substrate with an aqueous solution containing a lithium ion, a nickel ion, and a cobalt ion, and a step (first layer forming step) of forming a first layer containing a lithium-containing nickel cobalt oxide represented by a composition formula LiₓNi_{y}Co₂O₄ (0.05 ≤ × ≤ 1.0, 1.0 ≤ z ≤ 2.0, 1.0 ≤ z ≤ 2.0, and x + y + z = 2 to 3) on the surface of the conductive substrate, by subjecting the conductive substrate coated with the aqueous solution to a heat treatment. The method for producing an anode for electrolysis of the present embodiment may further include a step (second layer forming step) of forming a second layer on a surface of the first layer.

### (Pretreatment Step)

Before conducting the coating step, the conductive substrate is preferably subjected to a chemical etching treatment in advance in order to remove contaminants such as metals and organic substances on the surface. A consumption amount of the conductive substrate due to the chemical etching treatment is preferably about 30 g/m² or more and 400 g/m² or less. In addition, in order to increase adhesion strength to the intermediate layer, the surface of the conductive substrate is preferably subjected to a roughening treatment in advance. Examples of the roughening treatment include a blast treatment of spraying powder, an etching treatment using a substrate-soluble acid, and plasma spraying.

### (Coating step)

In the coating step, the surface of the conductive substrate is coated with a precursor aqueous solution containing a lithium ion, a nickel ion, and a cobalt ion. The first layer is formed by a so-called thermal decomposition method. When forming the first layer by the thermal decomposition method, first, a precursor aqueous solution of the first layer is prepared. As the precursor containing a lithium component, a publicly known precursor such as lithium nitrate, lithium carbonate, lithium chloride, lithium hydroxide, and lithium carboxylate may be used. Examples of the lithium carboxylate may include lithium formate and lithium acetate. As the precursor containing a nickel component, a publicly known precursor such as nickel nitrate, nickel carbonate, nickel chloride, and nickel carboxylate may be used. Examples of the nickel carboxylate may include nickel formate and nickel acetate. As the precursor containing a cobalt component, a publicly known precursor such as cobalt nitrate, cobalt carbonate, cobalt chloride, and cobalt carboxylate may be used. Examples of the cobalt carboxylate may include cobalt formate and cobalt acetate. Among these, at least any one of lithium carboxylate, nickel carboxylate, and cobalt carboxylate is preferably used as a precursor, because a dense first layer can be formed even when calcination is performed at a low temperature as described later.

The precursor aqueous solution can be prepared by dissolving a lithium ion source, a nickel ion source, and a cobalt ion source in water such that a molar ratio of lithium, nickel, and cobalt is in a range of Li:Ni:Co = 1:(1 to 20):(1 to 20). In consideration of solubility, stability during storage, and the like, a concentration of the nickel ion source such as nickel carboxylate is preferably 0.1 mol/L or more and 2 mol/L or less, and more preferably 0.2 mol/L or more and 1.0 mol/L or less.

As a method of applying the aqueous solution containing a lithium ion, a nickel ion, and a cobalt ion to the surface of the conductive substrate, a publicly known method such as brush coating, roller coating, spin coating, and electrostatic coating can be used. Next, the conductive substrate coated with the aqueous solution may be dried, as necessary. A drying temperature is preferably a temperature (for example, about 60 to 80 °C) at which a solvent is not rapidly evaporated.

### (First Layer Forming Step)

In the first layer forming step, the conductive substrate coated with the aqueous solution is subjected to a heat treatment. Accordingly, the first layer containing the lithium-containing nickel cobalt oxide represented by the composition formula LiₓNi_{y}Co₂O₄ (0.05 ≤ × ≤ 1.0, 1.0 ≤ y ≤ 2.0, 1.0 ≤ z ≤ 2.0, and x + y + z = 2 to 3) can be formed on the surface of the conductive substrate.

A temperature of the heat treatment can be appropriately set. In consideration of a decomposition temperature of the precursor and a production cost, the temperature of the heat treatment is preferably 350 °C or higher and 600 °C or lower, more preferably 400 °C or higher and 600 °C or lower, and particularly preferably 450 °C or higher and 550 °C or lower. For example, the decomposition temperature of lithium nitrate is about 430 °C, the decomposition temperature of cobalt acetate is about 410 °C, and the decomposition temperature of nickel acetate is about 370 °C. Thus, setting the temperature of the heat treatment to 450 °C or higher allows for more reliably decomposing each of the components. However, the temperature of the heat treatment exceeding 600 °C may accelerate oxidation of the conductive substrate, and may cause an increase in electrode resistance to increase a voltage loss. A time of the heat treatment may be appropriately set in consideration of a reaction rate, productivity, oxidation resistance of the first layer surface, and the like.

The thickness of the first layer to be formed can be controlled by appropriately setting the number of times of applying the aqueous solution in the coating step described above. Applying of the aqueous solution and drying may be repeated for each layer so that the heat treatment can be performed to all the layers after an uppermost layer is formed. Instead, applying of the aqueous solution and the heat treatment (pretreatment) may be repeated for each layer so that the heat treatment can be performed to all the layers after an uppermost layer is formed. A temperature of the pretreatment and the temperature of the heat treatment for all the layers may be the same or different. A time of the pretreatment is preferably shorter than the time of the heat treatment for all the layers.

The first layer containing the lithium-containing nickel cobalt oxide is formed by subjecting the conductive substrate coated with the aqueous solution to the heat treatment. The first layer can be formed by performing a heat treatment at a relatively low temperature, thereby suppressing a reaction between nickel contained in the conductive substrate and a component forming the first layer. That is, a molar ratio of lithium, nickel, and cobalt in the lithium-containing nickel cobalt oxide that composes the first layer is substantially the same as the molar ratio of lithium, nickel, and cobalt in the aqueous solution.

### (Second Layer Forming Step)

In the second layer forming step, the second layer is formed on the surface of the first layer formed in the first layer forming step described above. As a method for forming the second layer, a conventionally known technique is appropriately selected depending on the type of the catalyst of the second layer, and is not limited. For example, the second layer can be formed by a method such as sputtering or arc ion plating, in addition to the thermal decomposition method same as the method for forming the first layer. When the second layer is formed using multiple catalysts as described above, a single second layer can be formed by mixing the respective components. When forming the mixed catalyst layer by, for example, the thermal decomposition method, a coating solution in which all the precursors of the respective catalysts are mixed is prepared, then the first layer is coated with the coating solution and subjected to the heat treatment. In addition, by preparing coating solutions each containing the precursor of the catalyst composing the respective layer and by overlappingly applying those solutions the second layer can also be formed.

### <Electrolysis Cell>

When the anode for electrolysis of the present invention is used, an electrolysis cell such as an alkaline water electrolysis cell can be constituted. Hereinafter, considering the case of using the anode for electrolysis of the present invention as an anode for alkaline water electrolysis to provide the alkaline water electrolysis cell, constituent materials other than the anode will be described.

For a cathode, a substrate formed of a material resistant to alkaline water electrolysis and a catalyst having a low cathode overvoltage are preferably selected and used. As the substrate of the cathode, a nickel substrate or a nickel substrate coated with an activated cathode can be used. Examples of a shape of the substrate of the cathode include a plate-like shape, an expanded mesh, and a porous expanded mesh.

Examples of the material of the cathode include porous nickel having a large surface area and a Ni-Mo-based material. Other examples include a Raney nickel-based material such as Ni-Al, Ni-Zn, and Ni-Co-Zn; a sulfide material such as Ni-S; and a hydrogen storage alloy material such as Ti₂Ni. As the catalysts, those having properties such as low hydrogen overvoltage, high short-circuit stability, and high poisoning resistance are preferred. As other catalysts, metals such as platinum, palladium, ruthenium, and iridium, and oxides thereof are preferable.

As a diaphragm for electrolysis, asbestos, nonwoven fabric, an ion exchange membrane, a polymer porous membrane, a composite membrane of an inorganic substance and an organic polymer, or the like may be used. Specifically, an ion permeable diaphragm in which an organic fiber cloth is incorporated into a mixture of a hydrophilic inorganic material such as a calcium phosphate compound or calcium fluoride, and an organic binding material such as polysulfone, polypropylene, or polyvinylidene fluoride can be used. In addition, an ion permeable diaphragm in which an elongated organic fiber cloth is incorporated in a film forming mixture of a granular inorganic hydrophilic substance such as an oxide or hydroxide of antimony or zirconium, and an organic binder such as a fluorocarbon polymer, polysulfone, polypropylene, polyvinyl chloride, or polyvinyl butyral can be used.

When the alkaline water electrolysis cell including the anode for electrolysis of the present embodiment as a component is used, a highly concentrated alkaline aqueous solution can be electrolyzed. The alkaline aqueous solution used as an electrolyte solution is preferably an aqueous solution of an alkali metal hydroxide such as potassium hydroxide (KOH) or sodium hydroxide (NaOH). A concentration of the alkaline aqueous solution is preferably 1.5% by mass or more and 40% by mass or less. In addition, the concentration of the alkaline aqueous solution is preferably 15% by mass or more and 40% by mass or less because the electrical conductivity is high and an electric power consumption can be decreased. Further, in consideration of cost, corrosiveness, viscosity, operability, and the like, the concentration of the alkaline aqueous solution is preferably 20% by mass or more and 30% by mass or less.

### <Accelerated Deterioration Test of Anode>

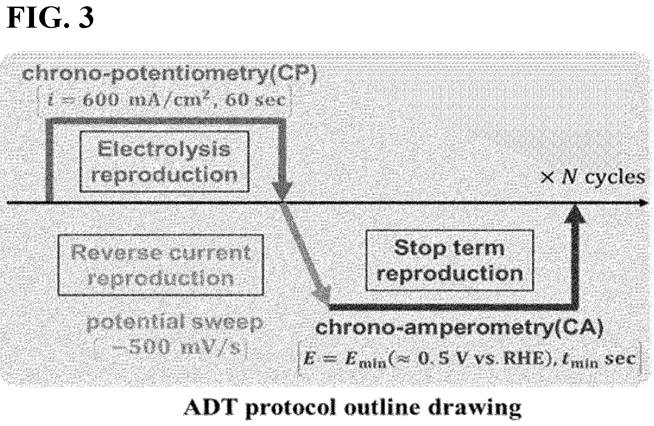

An accelerated deterioration test (accelerated durability test (ADT)) of the anode, which simulates a start-stop of the electrolyzer by combining a current control and a potential control will be described with reference to FIG. 3. In the test, a set of constant current electrolysis and potential sweep and potential holding is set as one cycle, and this cycle is continuously performed a plurality of times, so that electrode deterioration under potential fluctuation conditions can be accelerated. First, in the constant current electrolysis to be performed at the beginning of the cycle, 6 kA/m², which simulates a starting condition of the alkaline water electrolysis, is applied for 1 minute (CP). Subsequently, in order to simulate generation of a reverse current due to a stoppage of the electrolysis, the potential sweep (LSV) at 500 mV/s from a natural potential to a predetermined low potential (Emin) and potential holding for 1 minute are performed (CA). As Emin, 0.5 V vs. RHE is used as a standard condition. This is because this potential is determined as appropriate as a potential reached by the anode based on a reverse current reproduction experiment in a small bipolar electrolyzer. Furthermore, in order to increase acceleration performance, Emin can be further reduced. The set of the constant current electrolysis and the potential sweep and potential holding is repeated a plurality of times (for example, 200 times), and then electrochemical measurement is performed.

### Examples

Hereinafter, the present invention will be specifically described based on Examples, but the present invention is not limited to these Examples.

### <Production of Anode for Alkaline Water Electrolysis>

### (Example 1)

Lithium nitrate (manufactured by Wako Pure Chemical Industries, Ltd., purity: 99%), nickel acetate tetrahydrate (Ni(CH₃COO)₂·4H₂O, manufactured by Junsei Chemical Co., Ltd., purity: 98.0%), and cobalt acetate tetrahydrate (Co(CH₃COO)₂·4H₂O, manufactured by Junsei Chemical Co., Ltd., purity: 99.0%) were added to pure water and dissolved to obtain an aqueous solution. A molar ratio of lithium, nickel, and cobalt in the obtained aqueous solution was Li:Ni:Co = 0.12:0.53:0.35. A concentration of nickel acetate in the aqueous solution was 0.86 mol/L.

As an anode substrate, an expanded mesh (10 cm × 10 cm, LW × 3.7 SW × 0.9 ST × 0.8 T) formed of nickel was prepared. The expanded mesh was subjected to a blast treatment (0.3 MPa) with alumina particles of 60 mesh, and then the mesh was immersed in 20% by mass hydrochloric acid and subjected to a chemical etching treatment for 6 minutes at a temperature close to a boiling point. The surface of the anode substrate after the chemical etching treatment was coated with the above aqueous solution by using a brush, and then dried at 80 °C for 15 minutes. Next, the heat treatment was performed at 450 °C for 15 minutes in an air atmosphere. The process from the coating of the aqueous solution to the heat treatment was repeated 20 times to obtain an anode for alkaline water electrolysis in which a first layer (substantial composition: Li_{0.6}Ni_{1.3}Co_{1.4}O₄) was formed on the surface of the anode substrate. A metal amount of the formed first layer was 4 g/m².

### (Example 2)

A first layer was formed on the surface of the anode substrate in the same manner as in Example 1. In addition, nickel nitrate and cobalt nitrate were dissolved in pure water to obtain a coating solution in which a molar ratio of nickel to cobalt was Ni:Co = 33.3:66.7. The surface of the first layer was coated with the obtained coating solution such that a metal amount per coating was 1 g/m², and then dried at room temperature for 10 minutes and at 60 °C for 10 minutes. Next, thermal decomposition was performed by a heat treatment at 450 °C for 15 minutes in an air circulation electric oven. The process from the coating of the coating solution to the thermal decomposition was repeated 4 times to obtain an anode for alkaline water electrolysis in which a second layer (composition: NiCo₂O₄) was formed on the surface of the first layer. A metal amount of the formed second layer was 4 g/m².

### (Comparative Example 1)

An anode for alkaline water electrolysis was obtained in the same manner as in Example 2 except that the first layer was not formed and the second layer (composition: NiCo₂O₄) was directly formed on the surface of the anode substrate. The metal amount of the formed second layer was 4 g/m².

### (Comparative Example 2)

Lithium nitrate (manufactured by Wako Pure Chemical Industries, Ltd., purity: 99%) and nickel acetate tetrahydrate (Ni(CH₃COO)₂·4H₂O, manufactured by Junsei Chemical Co., Ltd., purity: 98.0%) as precursors were added to pure water and dissolved to obtain an aqueous solution. A molar ratio of lithium to nickel in the obtained aqueous solution was Li:Ni = 0.1:1.9. A concentration of nickel acetate in the aqueous solution was 0.56 mol/L. Then, an anode for alkaline water electrolysis in which a first layer (composition: Li_{0.1}Ni_{1.0}O₂) was formed on the surface of the anode substrate was obtained in the same manner as in Example 1 described above except that the obtained aqueous solution was used. A metal amount of the formed first layer was 4 g/m².

### (Comparative Example 3)

A first layer was formed on the surface of the anode substrate in the same manner as in Comparative Example 2. Then, an anode for alkaline water electrolysis in which a second layer (composition: NiCo₂O₄) was formed on the surface of the first layer was obtained in the same manner as in Example 2 described above. The metal amount of the formed second layer was 4 g/m².

### <Accelerated Durability Test>

The anodes for alkaline water electrolysis of Examples 1 and 2 and Comparative Examples 1 to 3 were used as test samples, and the accelerated durability test was performed under the following conditions.
Current density: 6 kA/m²
Emin: 0.5 V vs. RHE
Number of cycles: 9,000 at maximum

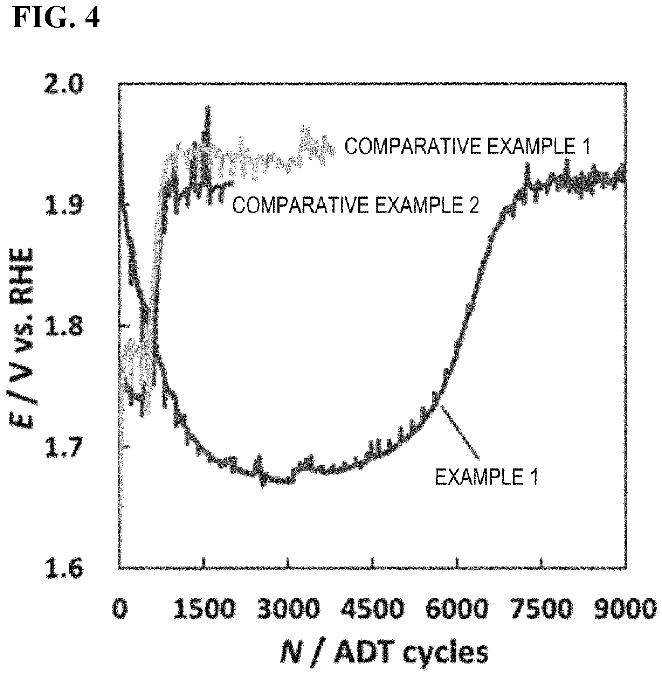

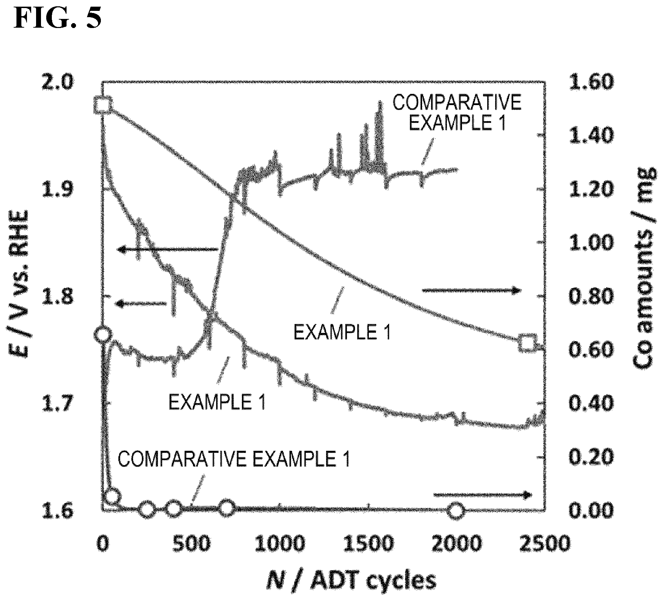

FIG. 4 shows a change in a potential at the time of CP in each of Example 1, Comparative Example 1, and Comparative Example 2, and FIG. 5 shows residual amounts of Co on the anodes measured by XRF in Example 1 and Comparative Example 1. In Comparative Example 1, the potential at the time of CP rapidly increased from about 800 cycles, and Co on the anode significantly decreased before 200 cycles. An amount of Co in peelings was much smaller than an amount of lost Co from the anode, hence it was presumed that Co was mainly lost by elution. In Example 1, the potential was initially high and catalytic activity was low, but the potential was 1.7 V vs. RHE or less at around 1,500 to 4,500 cycles, and the activity was higher than an initial value of Comparative Example 1 for a long period of time. About 40% of Co remained on the anode even after 2,400 cycles. From an atomic ratio of Co to Ni calculated from XRF, no selective decrease of Co was observed. Therefore, it was confirmed that a catalyst of Example 1 had an effect of suppressing substrate exposure due to elution and peeling of the catalyst component.

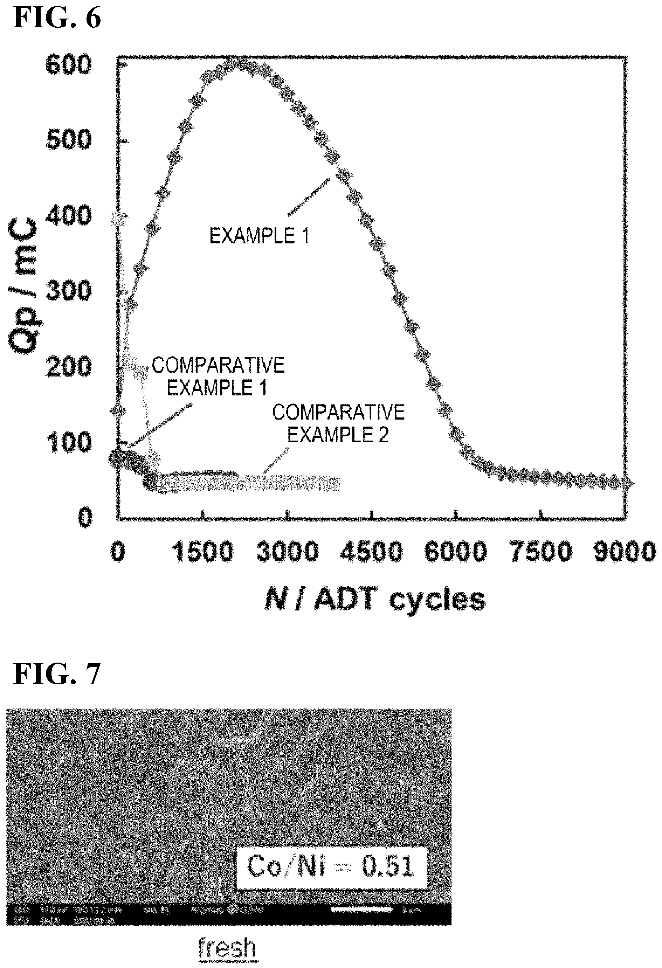

FIG. 6 shows a change in an electric capacity of the anode (a peak electric quantity obtained at a sweep rate of 50 mV/s in a range of 1.0 to 1.5 V vs. RHE of the anode potential was calculated). After 600 cycles, a peak derived from the Ni substrate strongly appeared, and at approximately the same time, an increase in peelings in an in-cell solution was also observed. Therefore, a large increase in overvoltage observed around 600 cycles in FIG. 4 was considered as a result of exposure of the Ni substrate due to the peeling of the catalyst. On the other hand, an electric quantity in Example 1 was much larger than that in Comparative Example 1. This result was considered to be due to an increase in a reaction area.

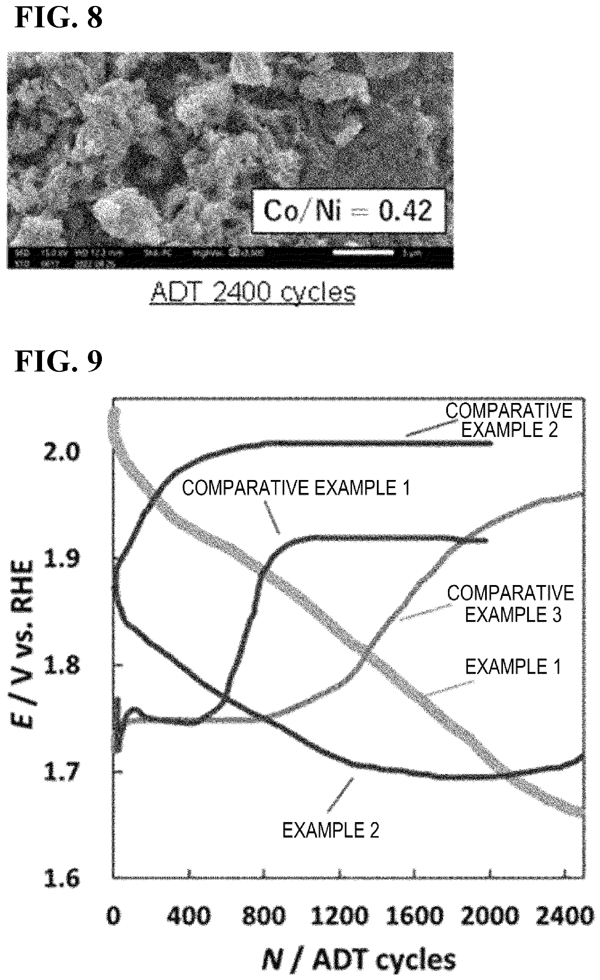

In electron micrographs of FIGs. 7 and 8, it was observed that roughness of the catalyst layer of Example 1 increased after 2,400 cycles. This is presumed to be one of factors that maintain high activity.

FIG. 9 shows a change in the potential in each of Examples 1, 2 and Comparative Examples 1 to 3. A transition of the potential was similar to that of Example 1, but an initial potential was lower than that of Example 1. On the other hand, Comparative Example 2 maintained a higher potential than Example 1. This indicated that activation could be achieved by adding a Co component as a catalyst. Comparative Example 3 exhibited the same potential as that in Comparative Example 1 and stability longer than that in Comparative Example 1, but the performance of Comparative Example 3 was inferior to that in Example 2. This indicates that the first layer LiₓNi_{y}Co₂O₄ was superior to the first layer Li_{0.1}Ni_{1.9}O₂.

### INDUSTRIAL APPLICABILITY

The anode for electrolysis of the present invention is suitable as, for example, an anode for alkaline water electrolysis, which constitutes an electrolytic facility or the like using electric power having a large output fluctuation, such as renewable energy, as a power source.

### REFERENCE SIGNS LIST

2: conductive substrate
4: first layer
6: second layer
10, 20: anode for electrolysis

## Claims

1. An anode for electrolysis, comprising:
a conductive substrate in which at least a surface of the conductive substrate is formed of nickel or a nickel-based alloy; and
a first layer formed on the surface of the conductive substrate, the first layer being capable of functioning as a catalyst layer comprising a lithium-containing nickel cobalt oxide represented by a composition formula LiₓNi_{y}Co₂O₄ (0.05 ≤ × ≤ 1.0, 1.0 ≤ y ≤ 2.0, 1.0 ≤ z ≤ 2.0, and x + y + z = 2 to 3).

2. The anode for electrolysis according to claim 1, further comprising:
a second layer formed on the surface of the first layer, the second layer being capable of functioning as a catalyst layer.

3. The anode for electrolysis according to claim 2,
wherein the second layer comprises at least one catalyst selected from the group consisting of a nickel cobalt spinel oxide, a lanthanide nickel cobalt perovskite oxide, an iridium oxide, and a ruthenium oxide.

4. The anode for electrolysis according to any one of claims 1 to 3,
wherein the lithium-containing nickel cobalt oxide is a spinel-type nickel cobalt oxide containing a lithium component.

5. A method for producing an anode for electrolysis, the method comprising:
coating a surface of a conductive substrate in which at least the surface of the conductive substrate is formed of nickel or a nickel-based alloy with an aqueous solution containing a lithium ion, a nickel ion and a cobalt ion; and
forming a first layer comprising a lithium-containing nickel cobalt oxide represented by a composition formula LiₓNi_{y}Co₂O₄ (0.05 ≤ × ≤ 1.0, 1.0 ≤ y ≤ 2.0, 1.0 ≤ z ≤ 2.0, and x + y + z = 2 to 3) on the surface of the conductive substrate by subjecting the conductive substrate coated with the aqueous solution to heat treatment, the first layer being capable of functioning as a catalyst layer.

6. The method for producing an anode for electrolysis according to claim 5,
wherein the conductive substrate coated with the aqueous solution is subjected to the heat treatment at a temperature of 400 °C or higher and 600 °C or lower.

7. The method for producing an anode for electrolysis according to claim 5 or 6, further comprising:
forming a second layer capable of functioning as a catalyst layer on a surface of the first layer.
